# EUROPEAN PATENT SPECIFICATION

(11) **EP 2 645 734 B1**
(45) Date of publication and mention of the grant of the patent: **28.08.2019**
(21) Application number: 13156070.8
(22) Date of filing: 21.02.2013
(51) Int. Cl.: H04Q 9/00, H01M 10/00

(54) **BATTERY SYSTEM**
BATTERIESYSTEM
SYSTÈME DE BATTERIES

(30) Priority: 29.03.2012 JP 2012075393
(43) Date of publication of application: 02.10.2013
(73) Proprietor: Hitachi, Ltd., Tokyo 100-8280 (JP)
(72) Inventor: Yokoura, Kouichi, Tokyo, 100-8220 (JP)
(74) Representative: MERH-IP Matias Erny Reichl Hoffmann Patentanwälte PartG mbB

(56) References cited:
- EP-A2- 2 328 256

## Description

### BACKGROUND OF THE INVENTION

### FIELD OF THE INVENTION

The present invention relates to a battery system having a skip communication function.

### DESCRIPTION OF THE RELATED ART

When a battery is charged or discharged, since there is little sudden change physically and chemically, control on a millisecond basis or by a greater control unit is possible. Therefore, a large-scale battery system can be constructed and battery units with different scales can be formed in plural hierarchical levels, such as a battery module as a minimum unit for use, a battery pack including plural such battery modules connected in series and in parallel, and a battery system including plural such battery packs connected in parallel.

For example, JP-T-2009-538112 discloses a battery system including battery units with different scales in plural hierarchical levels.

Another example, EP 2 328 256 A2 discloses a battery system where the SOC of a plurality of battery cells is calculated and then the battery ECU selects which battery cell to be discharged in a selected group by turning on the corresponding switching element on.

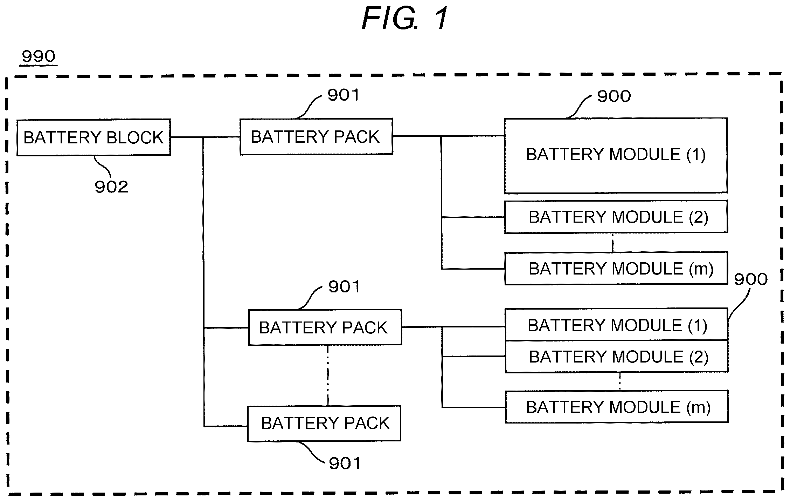

Meanwhile, in a large-scale battery system thus formed hierarchically, a direct control unit is decided according to the relation between a main battery unit and a sub battery unit which is smaller in scale than the main battery unit. Therefore, in a battery system 990 including three or more hierarchical levels such as three battery units with different scales as shown in FIG. 1, for example, a battery module 900 as a minimum unit, a battery pack 901 including plural such battery modules 900, and a battery block 902 including plural such battery packs 901, the control unit differs between hierarchical levels, generating delay in communications and processing. Particularly when an abnormality occurs in the battery system, this communication delay may cause delay in coping with the abnormality.

### SUMMARY OF THE INVENTION

In view of the foregoing circumstances, it is an object of the invention to provide a battery system in which delay in communication and processing is restrained even if the battery system is constructed with plural hierarchical structures.

According to an aspect of the invention, a battery system includes: a battery module having plural battery cells and a battery module control unit which collects battery information of the plural battery cells; a battery pack having plural battery modules and a battery pack control unit which collects information of the plural battery modules; and a battery block having plural battery packs and a battery block control unit which collects information of the plural battery packs. The battery module control unit and the battery pack control unit communicate with each other via a first communication line. The battery pack control unit and the battery block control unit communication with each other via a second communication line. The battery module control unit and the battery block control unit have a communication line in which direct communication is carried out without having a relay of the battery pack control unit.

By carrying out the invention, a battery system in which delay in communication and processing is restrained even if the battery system is constructed with plural hierarchical structures can be provided.

### BRIEF DESCRIPTION OF THE DRAWINGS

FIG. 1 is a block diagram showing a battery system according to the related art.
FIG. 2 is a block diagram showing a power generation system according to the invention.
FIG. 3 shows hierarchical structures of a battery system according to the invention.
FIG. 4 shows communication paths in the battery system according to the invention.
FIG. 5 shows details of a battery module control unit according to the invention.
FIG. 6 shows a communication method according to the invention.
FIG. 7A is a control flow using voltage information in an abnormality detecting unit according to the invention. FIG. 7B is a control flow using current information. FIG. 7C is a control flow using temperature information.

### DESCRIPTION OF THE PREFERRED EMBODIMENTS

Hereinafter, a battery system according to an embodiment of the invention will be described with reference to the drawings.

First, an outline of the battery system according to the embodiment of the invention will be described.

An electric power system based on renewable energy such as wind power generation and solar power generation is advantageous in that the system poses less stress on the natural environment, but the power generation capability is influenced by the natural environment. Specifically, since the strength of wind and the intensity of sunlight change constantly, there is a concern that this change may have an adverse effect on the electric power system such as frequency fluctuation and voltage fluctuation.

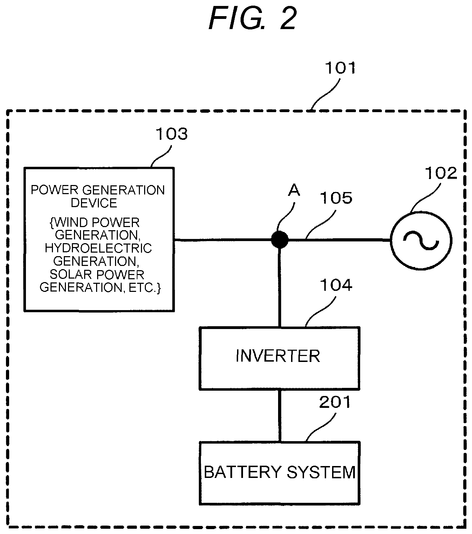

As an approach to eliminate such a concern, an electric power system network in which a battery system is provided together with a renewable energy power generation device, thus restraining frequency fluctuation and voltage fluctuation in the electric power system, is proposed. FIG. 2 is a block diagram schematically showing an electric power system network 101 to which a battery system 201 according to the invention is applied.

The electric power system network 101 includes an electric power system 102, a power generation device 103, an inverter 104, and a battery system 201 according to the invention, as shown in FIG. 2.

The power generation device 103 has a function of supplying, for example, electric power generated from renewable energy to the electric power system 102. At a connecting point A on en electric wire 105 connecting the power generation device 103 and the electric power system 102, the battery system 201 according to the invention is connected via the inverter 104.

The inverter 104 has a function of converting electric power generated by the power generation device 103 to DC power and supplying the converted DC power to the battery system 201, and a function of converting DC power stored in the battery system 201 to AC power and supplying the converted AC power to the electric power system 102. Power delivery to a load is carried out via the AC power electric system 102.

When a renewable energy power generation device is employed as the power generation device 103, the output thereof fluctuates due to the influence of changes in the natural environment such as weather and seasons. This output fluctuation causes frequency fluctuation and voltage fluctuation in the electric power system 102 and therefore is a factor in the lowering of the power quality of the electric power system 102.

To cope with this, the battery system 201 according to the invention functions so that the frequency and voltage fluctuation in the electric power system 102 falls within a predetermined range. That is, the battery system 201 has a so-called buffer function such that when excess power is supplied to the electric power system 102, the battery system 201 is charged with the excess power, whereas when power is insufficient, the power stored in the battery system 201 is discharged. Thus, the battery system 201 according to the invention can restrain frequency fluctuation and voltage fluctuation in the electric power system 102.

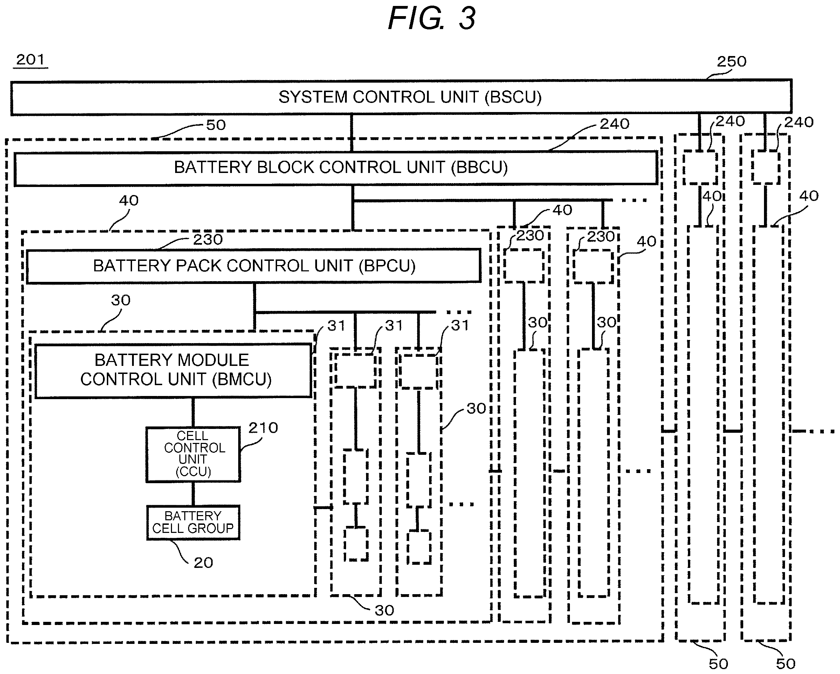

Next, a specific configuration of the battery system 201 according to the invention will be described with reference to FIG. 3. FIG. 3 is a block diagram conceptually showing hierarchical structures of the battery system 201 according to the invention. The battery system 201 according to the invention includes a battery module 30 as a minimum unit, a battery pack 40 including plural battery modules 30, and a battery block 50 including plural battery packs 40.

First, the configuration of the battery module 30 will be described specifically. The battery module 30 has a battery cell group 20, a cell control unit (CCU) 210 which collects battery information of the battery cell group 20 (for example, current information, voltage information, temperature information, state of charge and the like of battery cells), and a battery module control unit (BMCU) 31. The cell control unit 210 also performs balancing control between battery cells, which will be described later. The battery information collected by the cell control unit 210 is sent to the battery module control unit (BMCU) 31. The battery module control unit (BMCU) 31 calculates an average state of charge of the battery cell group 20 in the battery module 30, adds the battery information of the average state of charge of the battery cell group 20 to the above battery information, and transmits the battery information to a battery pack control unit (BPCU) 230, which is on a higher level.

The battery pack 40 has plural battery modules 30 and a battery pack control unit 230. The battery pack control unit 230 collects battery information outputted from each battery module control unit 31 and calculates information of an average state of charge of the battery modules 30, which is the average of the states of charge of the battery modules 30 in the battery pack 40. The information of the average state of charge of the plural battery modules 30 is added to the battery information acquired from the battery module control unit 31, and the battery information is outputted to a battery block control unit 240, which is on a still higher level.

The battery block 50 has plural battery packs 40 and a battery block control unit 240. The battery block control unit 240 collects battery information outputted from each battery pack control unit 230 and calculates information of an average state of charge of the battery packs 40, which is the average of the states of charge of the battery packs 40 in the battery block 50. The information of the average state of charge of the plural battery packs 40 is added to the battery information acquired from the battery pack control unit 230, and the battery information is outputted to a system control unit 250, which is on a still higher level. In this description, there are plural battery packs 40 in the battery block 50. However, only one battery pack 40 may form the battery block 50. In such a case, the battery block control unit 240 outputs the battery information outputted from the battery pack control unit 230, directly to the system control unit 250.

According to the invention, since the states of batteries are thus monitored in plural hierarchical levels, the battery system 201 has a high level of safety. Also, since each of the battery module 30, the battery pack 40 and the battery block 50 according to the invention can be replaced on the respective levels, the battery system is easy to maintain.

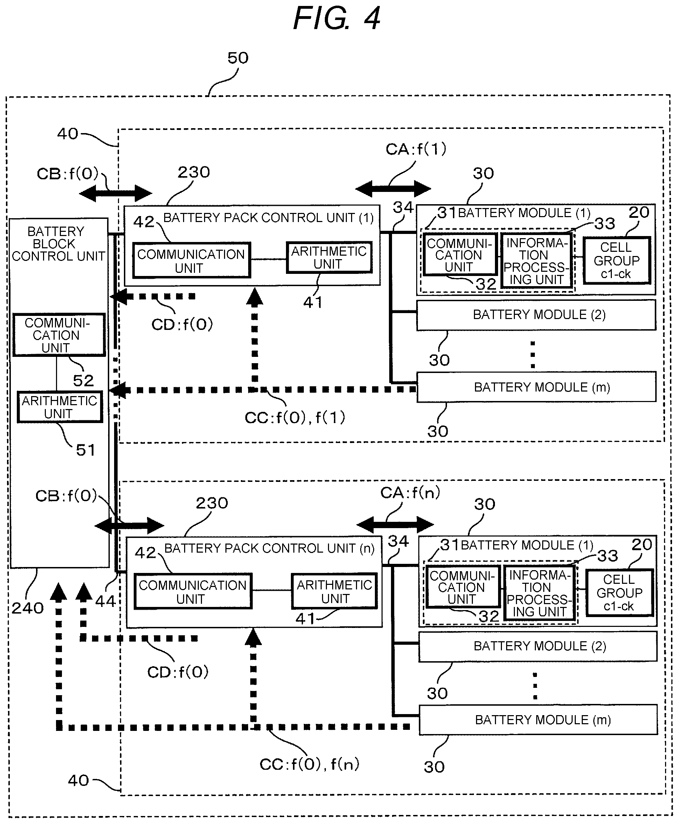

Next, connections between hierarchical levels will be described with reference to FIG. 4. The battery module control unit 31 has an information processing unit 33 which acquires battery information (for example, current information, voltage information, temperature information) of the battery cell group 20, and a communication unit 32 which transmits the battery information acquired by the information processing unit 33 to the battery pack control unit 230 and receives a control signal from the battery pack control unit 230. The battery cell group 20 may include plural battery cells ("c1" to "ck", where k is the number of battery cells) as shown in FIG. 4 or may be formed by a single battery cell. The communication unit 32 is a device capable of communication at frequencies f(1) to f(n) converted to a communication frequency corresponding to the battery pack control unit 230 as a main unit, as will be described later.

The battery pack control unit 230 has a communication unit 42 which receives the battery information of the plural battery modules 30 ("1" to "m", where m is the number of battery modules 30) transmitted from the communication unit 32 and transmits the battery information and control signal to the battery module control unit 31 and the battery block control unit 240, and an arithmetic unit 41 which determines whether balancing between battery modules is necessary or not based on the battery information of each battery module 30 received by the communication unit 42 and calculates the state of charge (SOC) of the battery module 30.

The communication unit 42 is a device capable of receiving a signal with one of the frequencies f(1) to f(n) outputted and modulated from the battery module as a sub unit and communicating a control signal converted from the above frequency to a communication frequency f(0) corresponding to the battery block control unit 240 as a main unit. Also, the communication unit 42 of the battery pack control unit 230 is configured not to take in other communication frequencies than the communication frequency of the own unit (for example, if it is a battery pack control unit (1), the corresponding communication frequency f(1)) and the communication frequency f (0) used for communication with the battery block control unit 240 as the main unit.

The battery block control unit 240 has a communication unit 52 which receives the battery information outputted from the plural battery pack control units 230 ("1" to "n", where n is the number of battery packs 40) transmitted from the communication unit 32 and transmits the battery information and control signal to a control unit on a still higher level, not shown, and the battery pack control unit 230. The battery block control unit 240 also has an arithmetic unit 51 which determines whether balancing between battery packs is necessary or not based on the battery information of each battery pack 40 received by the communication unit 52 and calculates the state of charge (SOC) of the battery pack 40.

The communication unit 52 is configured to be capable of receiving and transmitting the control signal with the communication frequency f(0) outputted and modulated from the battery pack control unit 230 as a sub unit.

If the communication frequencies f(0) and f(1) to f(n) are, for example, in a range of 100 MHz to 10 GHz, wireless communication as well as wired communication can be used.

The communication unit 32 of each battery module 30 is connected to the battery pack control unit 230 on a higher level via a communication line 34. Each battery pack control unit 230 is connected to each battery block control unit 240 via a communication line 44 and successive communication is carried out with a higher-level control unit as a main unit. The communication method will be described in detail later. The communication line may be wired or wireless. Wired communication is advantageous in that the rate of signal transmission error is low, whereas wireless communication is advantageous in that there is no need to arrange wiring.

Here, frequency modulation, which is not easily influenced by other signals, is used as a modulation technique. However, as a matter of course, other modulation techniques may also be used.

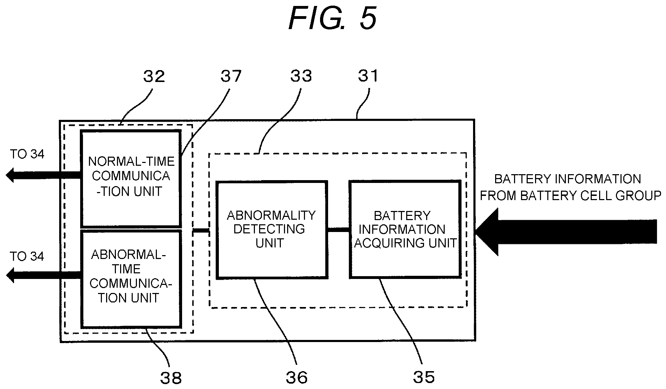

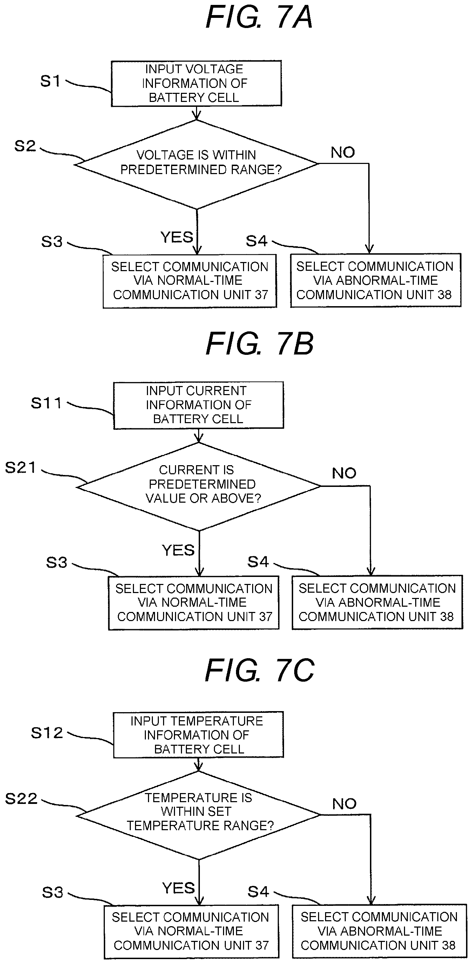

Next, the detailed configuration of the battery module control unit 31 in the battery module 30 will be described with reference to FIG. 5. As described above, the battery module control unit 31 has the communication unit 32 and the information processing unit 33. The information processing unit 33 has a battery information acquiring unit 35 and an abnormality detecting unit 36 which detects whether there is an abnormality occurring in the battery module, based on the battery information acquired by the battery information acquiring unit 35. The abnormality detecting unit 36 determines whether the acquired battery information falls within a predetermined current range, falls within a predetermined voltage range and falls within a predetermined temperature range. If the battery information falls within the predetermined ranges, a modulated signal f(1) to f(n) is outputted to the battery pack control unit 230 from a normal-time communication unit 37 in the communication unit 32. A specific determination flow will be described later with reference to FIGS. 7A to 7C.

Meanwhile, if the abnormality detecting unit 36 determines that the battery information is not within the predetermined ranges, a control signal with the frequency f(1) to f(n), which is the communication frequency of the battery pack control unit 230 as the main unit, and a control signal with the frequency f(0), which is the communication frequency of the battery block control unit 240 as the main unit further above the main unit of the battery module, are outputted from an abnormal-time communication unit 38. As described above, the communication unit 42 of the battery pack control unit 230 is configured not to take in other signals than controls signals with the communication frequency of the own unit (for example, if it is the battery pack control unit (1), the corresponding communication frequency f(1)) and the frequency f(0), which is the communication frequency of the main unit. Therefore, abnormality information of the battery module 30 is inputted directly to the communication unit 52 of the battery block control unit 240.

With such a configuration, at the time of abnormality, a signal can be inputted directly to the higher-level main unit without communication via the battery pack control unit 230. Therefore, communication delay due to the use of a relay unit can be restrained.

Also, with respect to the signal outputted from the abnormal-time communication unit, by outputting not only the signal with the frequency f(0) but also the signal with the communication frequency f(1) to f(n) corresponding to the battery pack control unit 230 as the main unit of the battery module control unit 31, arithmetic operation in the battery pack control unit 230 becomes possible and whether there truly is an abnormality occurring can be calculated again. Therefore, the battery block control unit 240 can double-check any abnormality using the signal with the frequency f(0) outputted from the battery module control unit 31 and the signal calculated and modulated to the frequency f(0) by the battery pack control unit 230. Thus, reliability is improved. Moreover, by outputting the signal with the frequency f(1) to f(0) corresponding to the battery pack control unit 230 also to the battery pack control unit 230, instead of skipping the battery pack control unit 230 and outputting the signals only to the battery block control unit 240, it is also possible at the time of abnormality communication to determine whether the abnormality in the battery module 30 can be resolved by balancing between battery modules 30.

The communication system between units having the main unit-sub unit relation is shown in FIG. 4. Communication CA and communication CB indicated by solid lines represent the frequency of a control signal at normal time when there is no abnormality. Meanwhile, communication CC and communication CD indicated by dotted lines represent the frequency of a control signal at the time of occurrence of abnormality. When an abnormality occurs in the battery module 30 as described above, the communication system is switched from the communication CA to the communication CC and thus the control signal with the frequency f (0) is inputted to the communication unit 52 of the battery block control unit 240 without being data-processed by the battery pack control unit 230. The communication unit 52 of the battery block control unit 240 can receive a control signal with the communication frequency f(1) to f (n) of each battery pack control unit as a sub unit of the battery block. With such a configuration, when an abnormality occurs in the battery module 30 as a sub unit further below one of sub units, it is possible to carry out communication in which communication delay is restrained and reliability is thus improved.

Meanwhile, when an abnormality occurs in the battery pack control unit 230, since there is no relay unit between the battery pack control unit 230 and the battery block control unit 240, a control signal with the communication frequency f(0) reporting the abnormality is directly outputted through the communication CD to the communication unit 52 of the battery block control unit 240.

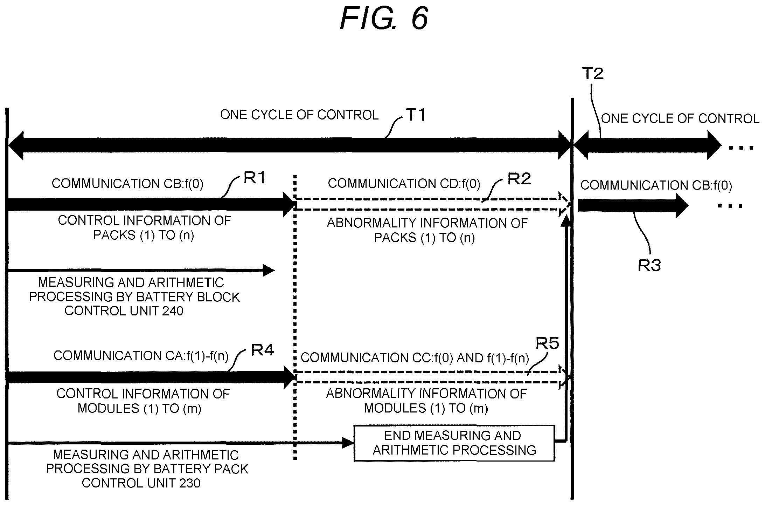

Next, the communication cycle of control will be described with reference to FIG. 6. In the battery system of this embodiment, communication delay is restrained even if an abnormality occurs in the battery module 30 and hence skip communication is carried out.

First, in the control according to this embodiment, as shown in FIG. 6, the cycle of communication between the battery block control unit 240 and the battery pack control unit 230 is the sum of a time R1 of the communication CB, which is normal control information, and a time R2 of the communication CD corresponding to the case where an abnormality occurs in the battery pack 40, and the length of the control cycle is T1. When there is no abnormality in the battery pack 40 and communication is carried out in the normal state, the time R2 of the communication CD section is a blank.

Meanwhile, the cycle of communication between the battery pack control unit 230 and the battery module control unit 31 is the sum of a time R4, which is normal control information, and a time R5 of the communication CC corresponding to the case where an abnormality occurs in the battery module 30, and the sum of the times R4 and R5 is the same as the length T1 of the control cycle. In the normal state where there is no abnormality in the battery module 30, the time R5 of the communication CC section is a blank, as in the above communication between the battery pack control unit 230 and the battery block control unit 240.

The time R1 of the communication CB and the time R4 of the communication CA are the same length. The time R2 of the communication CD and the time R5 of the communication CC are the same length. Moreover, the start times of the communication CB and the communication CA are synchronized. In other words, when the battery pack control unit 230 is adopted as an own unit, the communication cycle between the own unit and the main unit and the control cycle between the own unit and the sub unit are the same cycle and synchronized.

With such a configuration, when an abnormality is detected by the abnormality detecting unit 36 of the battery module control unit 31, the signal with the frequency f(0) inputted to the battery block control unit 240 can interrupt the communication CD section and communication delay generated by the signal interruption due to a shift in the communication cycle can be restrained.

In the operation in the normal state, when the communication CA (that is, control information of the frequency f(1) to f(n) corresponding to the battery pack 40) is inputted to the battery pack control unit 230, the arithmetic unit 41 of the battery pack control unit 230 starts measuring and arithmetic processing of the battery information. After that, when the measuring and arithmetic processing is finished, in the cycle following the end of the processing, the information measured and arithmetically processed by the battery pack control unit 230 is modulated to the frequency f(0) and outputted to the battery block control unit 240. In FIG. 6, since the measuring and arithmetic processing is finished within a control cycle 1S, the control signal is outputted in the next cycle T2 as the communication CB of the cycle T2.

Similar control is carried out when the communication CB (that is, a control signal with the frequency f(0)) is inputted to the battery block control unit 240. However, when there is no unit equivalent to a main unit of the battery block control unit 240, arithmetic processing ends and the calculated information is stored in a memory, not shown, provided in the battery block control unit 240.

Next, the processing at the abnormality detecting unit 36 shown in FIG. 5 will be described with reference to FIGS. 7A to 7C. First, FIG. 7A is referred to for explanation. In step S1, battery information (here, voltage information) acquired by the battery information acquiring unit 35 is inputted to the abnormality detecting unit 36. Next, in step S2, whether the acquired voltage of the battery cell is within a predetermined voltage range (here, for example, within a range of 2.7 to 4.2 V) is determined. If the voltage is determined here as within the predetermined range, the processing goes to step S3. The abnormality detecting unit 36 selects communication via the normal-time communication unit 37 and a control signal with the frequency f(1) to f(n) corresponding to the battery pack control unit 230 as the main unit of the battery module control unit 31 is outputted from this battery module control unit 31. Meanwhile, if the voltage is determined as not within the predetermined range in step S2, the processing goes to step S4. Communication via the abnormal-time communication unit 38 is selected and a control signal with one of the above frequencies f(1) to f(n) and a signal with the frequency f(0) corresponding to the communication of the battery block control unit 240 are outputted. The processing is thus carried out by the battery module control unit 31.

Next, a determination method for abnormality detection in the case where current information is used will be described with reference to FIG. 7B. The method is basically the same as the determination method described in FIG. 7A but is different in the battery information and the determination standard that are used. First, in step S11, the current information of the current flowing through the battery cell is inputted. After that, in step S21, whether the current value is above a predetermined range, that is, overcurrent (here, for example, whether the current of 10A or higher is flowing) is determined. If the current has the predetermined current value or below, the processing goes to step S3. If the current has the predetermined current value or above, the processing goes to step S4. Then, similar processing to steps S3 and S4 of FIG. 7A is carried out.

Finally, a determination method for abnormality detection in the case where temperature information is used will be described with reference to FIG. 7C. First, in step S12, the temperature information of the battery cell is inputted. After that, in step S22, whether the temperature information is within a predetermined range is determined. The temperature range is decided by setting a temperature condition to be used. For example, in this embodiment, the temperature is set within a range of 0 to 30°C. If the battery temperature is within the predetermined range, the processing goes to step S3. If the battery temperature is outside the predetermined range, the processing goes to step S4. Then, similar processing to steps S3 and S4 of FIG. 7A is carried out.

Since such control is performed in the abnormality detecting unit 36, when an abnormality occurs in the battery module 30, the abnormality can securely be detected and communication delay can be restrained, thus controlling the battery system.

By using the invention, a battery system in which delay in communication and processing is restrained even if the battery system is constructed with plural hierarchical structures can be provided.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A battery system comprising:
a battery module (30) having plural battery cells (20) and a battery module control unit (31) which collects battery information of the plural battery cells (20);
a battery pack (40) having plural battery modules (30) and a battery pack control unit (230) which collects information of the plural battery modules (30); and
a battery block (50) having plural battery packs (40) and a battery block control unit (240) which collects information of the plural battery packs (40);
wherein the battery module control unit (31) and the battery pack control unit (230) communicate with each other via a first communication line (34);
the battery pack control unit (230) and the battery block control unit (240) communicate with each other via a second communication line (44); and
the battery module control unit (31) and the battery block control unit (240) have a communication line (CC:f(0),f(n)) in which direct communication is carried out without having the battery pack control unit (230) as a relay.

2. The battery system according to claim 1, wherein
the first communication line (34) uses a first communication system to carry out communication,
the second communication line (44) uses a second communication system to carry out communication, and
the communication line (CC:f(0),f(n)) between the battery module control unit (31) and the battery block control unit (240) uses the second communication system to carry out communication.

3. The battery system according to claim 2, wherein
the first communication system and the second communication system have different communication frequencies from each other.

4. The battery system according to claims 2 or 3, wherein
a control cycle of the first communication system and a control cycle of the second communication system are substantially the same.

5. The battery system according to at least one of claims 2 to 4, wherein
the control cycle of the first communication system and the control cycle of the second communication system are synchronized.

6. The battery system according to at least one of claims 2 to 5, wherein
in the communication line (34, 44) in which direct communication is carried out without having a relay of the battery pack control unit (230), a control signal is outputted and communicated by the first communication system as well as the second communication system.

7. The battery system according to at least one of claims 1 to 6, wherein
the battery module (30) has an abnormality detecting unit (36) which detects an abnormality of the battery cell (20), and a communication unit (32) which communicates with a higher-level control unit, and
the communication line in which direct communication is carried out without having a relay of the battery pack control unit (230) is used in the case where the abnormality detecting unit (36) determines that there is an abnormality.

8. The battery system according to claim 7, wherein
the abnormality detecting unit (36) detects an abnormality using voltage information, current information and temperature information of the battery cell (20).

## Patentansprüche

1. Batteriesystem, das Folgendes umfasst:
ein Batteriemodul (30), das mehrere Batteriezellen (20) und eine Batteriemodulsteuereinheit (31), die Batterieinformationen der mehreren Batteriezellen (20) sammelt, besitzt;
eine Batteriebaugruppe (40), die mehrere Batteriemodule (30) und eine Batteriebaugruppensteuereinheit (230), die Informationen der mehreren Batteriemodule (30) sammelt, besitzt; und
einen Batterieblock (50), der mehrere Batteriebaugruppen (40) und eine Batterieblocksteuereinheit (240), die Informationen der mehreren Batteriebaugruppen (40) sammelt, besitzt; wobei
die Batteriemodulsteuereinheit (31) und die Batteriebaugruppensteuereinheit (230) über eine erste Kommunikationsleitung (34) miteinander kommunizieren;
die Batteriebaugruppensteuereinheit (230) und die Batterieblocksteuereinheit (240) über eine zweite Kommunikationsleitung (44) miteinander kommunizieren; und
die Batteriemodulsteuereinheit (31) und die Batterieblocksteuereinheit (240) eine Kommunikationsleitung (CC:f(0),f(n)) besitzen, in der eine direkte Kommunikation ausgeführt wird, ohne die Batteriebaugruppensteuereinheit (230) als ein Relais zu enthalten.

2. Batteriesystem nach Anspruch 1, wobei
die erste Kommunikationsleitung (34) ein erstes Kommunikationssystem verwendet, um eine Kommunikation auszuführen,
die zweite Kommunikationsleitung (44) ein zweites Kommunikationssystem verwendet, um eine Kommunikation auszuführen, und
die Kommunikationsleitung (CC:f(0),f(n)) zwischen der Batteriemodulsteuereinheit (31) und der Batterieblocksteuereinheit (240) das zweite Kommunikationssystem verwendet, um eine Kommunikation auszuführen.

3. Batteriesystem nach Anspruch 2, wobei
das erste Kommunikationssystem und das zweite Kommunikationssystem voneinander verschiedene Kommunikationsfrequenzen besitzen.

4. Batteriesystem nach Anspruch 2 oder 3, wobei
ein Steuerzyklus des ersten Kommunikationssystems und ein Steuerzyklus des zweiten Kommunikationssystems im Wesentlichen übereinstimmen.

5. Batteriesystem nach mindestens einem der Ansprüche 2 bis 4, wobei
der Steuerzyklus des ersten Kommunikationssystems und der Steuerzyklus des zweiten Kommunikationssystems synchronisiert sind.

6. Batteriesystem nach mindestens einem der Ansprüche 2 bis 5, wobei
in der Kommunikationsleitung (34, 44), in der eine direkte Kommunikation ausgeführt wird, ohne ein Relais der Batteriebaugruppensteuereinheit (230) zu enthalten, durch das erste Kommunikationssystem sowie das zweite Kommunikationssystem ein Steuersignal ausgegeben und kommuniziert wird.

7. Batteriesystem nach mindestens einem der Ansprüche 1 bis 6, wobei
das Batteriemodul (30) eine Anomaliedetektionseinheit (36), die eine Anomalie der Batteriezelle (20) detektiert, und eine Kommunikationseinheit (32), die mit einer übergeordneten Steuereinheit kommuniziert, enthält und
die Kommunikationsleitung, in der eine direkte Kommunikation ausgeführt wird, ohne ein Relais der Batteriebaugruppensteuereinheit (230) zu enthalten, verwendet wird, falls die Anomaliedetektionseinheit (36) bestimmt, dass eine Anomalie vorliegt.

8. Batteriesystem nach Anspruch 7, wobei
die Anomaliedetektionseinheit (36) eine Anomalie unter Verwendung von Spannungsinformationen, Strominformationen und Temperaturinformationen der Batteriezelle (20) detektiert.

## Revendications

1. Système de batterie comprenant :
un module de batterie (30) ayant plusieurs cellules de batterie (20) et une unité de commande de module de batterie (31) qui collecte des informations de batterie de la pluralité de cellules de batterie (20) ;
un pack de batterie (40) ayant plusieurs modules de batterie (30) et une unité de commande de pack de batterie (230) qui collecte des informations de la pluralité de modules de batterie (30) ; et
un bloc de batterie (50) ayant plusieurs packs de batterie (40) et une unité de commande de bloc de batterie (240) qui collecte des informations de la pluralité de packs de batterie (40) ;
dans lequel l'unité de commande de module de batterie (31) et l'unité de commande de pack de batterie (230) communiquent l'une avec l'autre via une première ligne de communication (34) ;
l'unité de commande de pack de batterie (230) et l'unité de commande de bloc de batterie (240) communiquent l'une avec l'autre via une deuxième ligne de communication (44) ; et
l'unité de commande de module de batterie (31) et l'unité de commande de bloc de batterie (240) ont une ligne de communication (CC:f(0),f(n)) dans laquelle une communication directe est établie sans avoir l'unité de commande de pack de batterie (230) comme relais.

2. Système de batterie selon la revendication 1, dans lequel
la première ligne de communication (34) utilise un premier système de communication pour établir une communication,
la deuxième ligne de communication (44) utilise un deuxième système de communication pour établir une communication, et
la ligne de communication (CC:f(0),f(n)) entre l'unité de commande de module de batterie (31) et l'unité de commande de bloc de batterie (240) utilise le deuxième système de communication pour établir une communication.

3. Système de batterie selon la revendication 2, dans lequel
le premier système de communication et le deuxième système de communication ont différentes fréquences de communication l'un par rapport à l'autre.

4. Système de batterie selon la revendication 2 ou 3, dans lequel
un cycle de commande du premier système de communication et un cycle de commande du deuxième système de communication sont sensiblement les mêmes.

5. Système de batterie selon l'une au moins des revendications 2 à 4, dans lequel
le cycle de commande du premier système de communication et le cycle de commande du deuxième système de communication sont synchronisés.

6. Système de batterie selon l'une au moins des revendications 2 à 5, dans lequel
dans la ligne de communication (34, 44) dans laquelle une communication directe est établie sans avoir un relais de l'unité de commande de pack de batterie (230), un signal de commande est émis et communiqué par le premier système de communication aussi bien que par le deuxième système de communication.

7. Système de batterie selon l'une au moins des revendications 1 à 6, dans lequel
le module de batterie (30) a une unité de détection d'anomalie (36) qui détecte une anomalie de la cellule de batterie (20), et une unité de communication (32) qui communique avec une unité de commande de niveau supérieur, et
la ligne de communication dans laquelle une communication directe est établie sans avoir un relais de l'unité de commande de pack de batterie (230) est utilisée au cas où l'unité de détection d'anomalie (36) détermine qu'il y a une anomalie.

8. Système de batterie selon la revendication 7, dans lequel l'unité de détection d'anomalie (36) détecte une anomalie en utilisant des informations de tension, des informations de courant et des informations de température de la cellule de batterie (20).
